# EUROPEAN PATENT APPLICATION

(11) **EP 0 846 529 A1**
(43) Date of publication of application: **10.06.1998**
(21) Application number: 97919688.8
(22) Date of filing: 24.04.1997
(51) Int. Cl.: B25J 13/00

(54) **ROBOT WITH SERVO TOOL AT FRONT END OF WRIST**

(30) Priority: 24.04.1996 JP 126353/96
(71) Applicant: FANUC LTD, Minamitsuru-gun, Yamanashi 401-05 (JP)
(72) Inventor: NISHI, Hiroji Fanuc Manshonharimomi Room 8-209, Yamanashi 401-05 (JP); OKADA, Takeshi Fanuc Manshonharimomi Room 10-306, Yamanashi 401-05 (JP)
(74) Representative: Billington, Lawrence Emlyn
(86) International application number: JP9701443
(87) International publication number: WO9739859

(57) **Abstract**

The driving source of the final wrist shaft of a robot is also used as the driving source of a servo tool. When a command E1 is outputted from a robot controller, another command E2 is not outputted and only the coil of a first hollow clutch is excited to fix a first arm (18) to the housing of a speed reducer. Consequently, the rotation of a servo motor M6 is transmitted only to a second arm (20) through the speed reducer, and the second arm (20) is rotationally displaced from the first arm (18). As a result, the front ends of the arms (18 and 20) are brought closer to or separated from each other and the hands of the robot are opened or closed. When the command E2 is outputted, the command E1 is not outputted and only a second hollow clutch is turned on. As a result, the arms (18 and 20) are coupled with each other and integrally driven by means of the motor M6 to change the attitude of the hands of the robot.

## Description

### Technical Field

The present invention relates to an industrial robot, and more particularly, to a robot for use with a servo-driven tool such as a servo hand and a servo gun to be attached to a distal end of a robot wrist.

### Background Art

In general, a robot is used with various tools attached to a distal end of a robot wrist. These tools include a tool having a servo drive axis (i.e., servo-controlled drive axis) for its own operation, such as a servo band and a servo gun. Hereinafter, such a tool is referred to as a "servo tool".

Conventionally, on a robot using the servo tool such as the servo band and the servo gun, an additional axis is provided for driving the servo tool in addition to basic axes (for example, six axes for a six-axis robot) for operating the robot itself.

The provision of the additional axis requires the additional installation of a servomotor and a servo amplifier, which inevitably results in a great increase of a manufacturing cost of a robot system as compared with a robot system using an air-driven tool. Also, providing a motor for driving the servo tool such as the servo hand and the servo gun at the robot wrist is undesirable in view of an installation space and a load of weight.

### Disclosure of Invention

An object of the present invention is to eliminate an additional axis for driving a servo tool in a robot using the servo tool, to thereby reduce the cost for provision of the servo tool such as the servo hand and the servo gun.

A robot having a servo tool at a distal end of a wrist of the present invention comprises: a servo tool operatively connected to a final wrist axis; a servomotor used as a drive source for said final wrist axis; and a drive source diverting means for using said servomotor as a drive source for said servo tool. The drive source diverting means has a changeover mechanism operatively connected to an output shaft of the servomotor, and the changeover mechanism operates in a diversion mode where the servomotor is used as a drive source for said servo tool and in a non-diversion mode where the servomotor is used as a drive source for the final wrist axis.

A changeover of the diversion mode and the non-diversion mode of the changeover mechanism can be controlled by a robot controller for controlling the robot. In order to control the servo tool with higher accuracy, it is preferable to provide a position detector for directly detecting a position of the servo tool, so that an output of position detector is sent to the robot controller and used for controlling the servo tool.

The servo tool suitable for such divertible drive source is exemplified by a servo band and a servo gun. Further, an electromagnetic clutch may be used as a changeover mechanism for easily changing over the diversion mode and the non-diversion mode.

### Brief Description of Drawings

FIG. 1 is a perspective view of a robot provided with six servo-controlled drive axes;
FIG. 2a is a schematic view showing a servo hand connected to a final wrist axis, according to a first embodiment of the present invention, and FIG. 2b is a schematic view of the servo hand shown in FIG. 2a, viewed from the side;
FIG. 3 is a schematic view showing a servo gun connected to a final wrist axis, according to a second embodiment of the present invention; and
FIG. 4 is a block diagram showing an essential portion of a robot control unit configuration which can be used in embodiments of the present invention.

### Best Mode of Carrying out the Invention

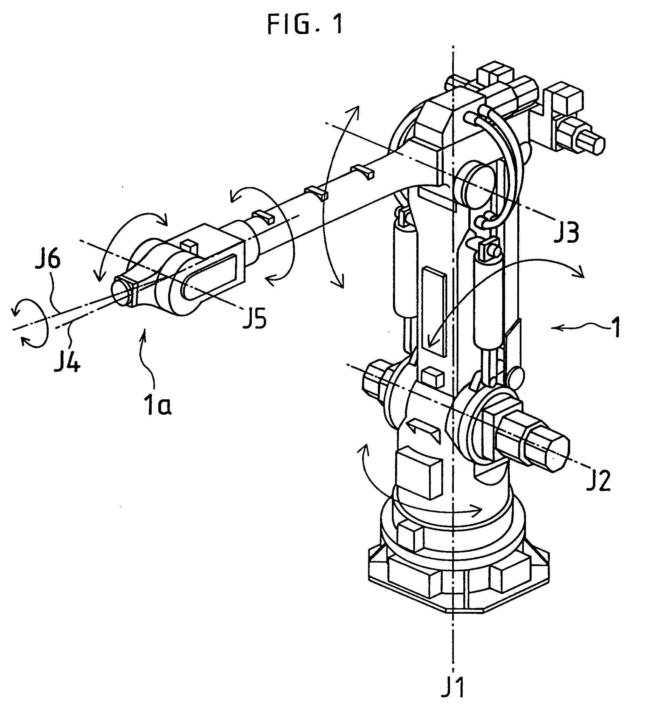

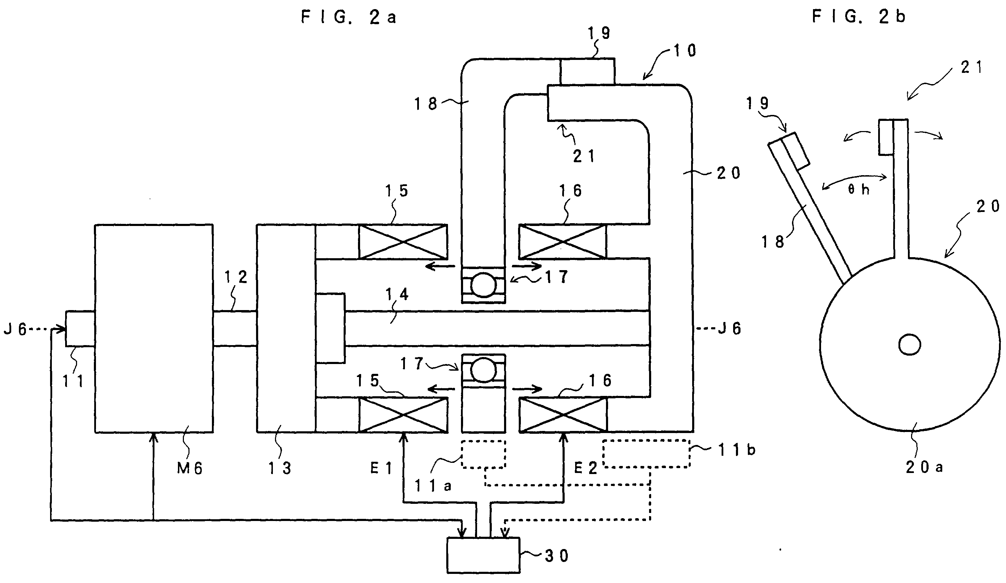

As shown in FIG. 1, a robot body 1 has six servo-controlled drive axes J1 to J6, and a servo tool is mounted on a final wrist axis J6 of three axes J4 to J6 for a wrist portion 1a. In a first embodiment, as the servo tool, a servo hand 10 shown in FIGS. 2a and 2b is mounted on the final wrist axis J6 of the six-axis robot shown in FIG. 1.

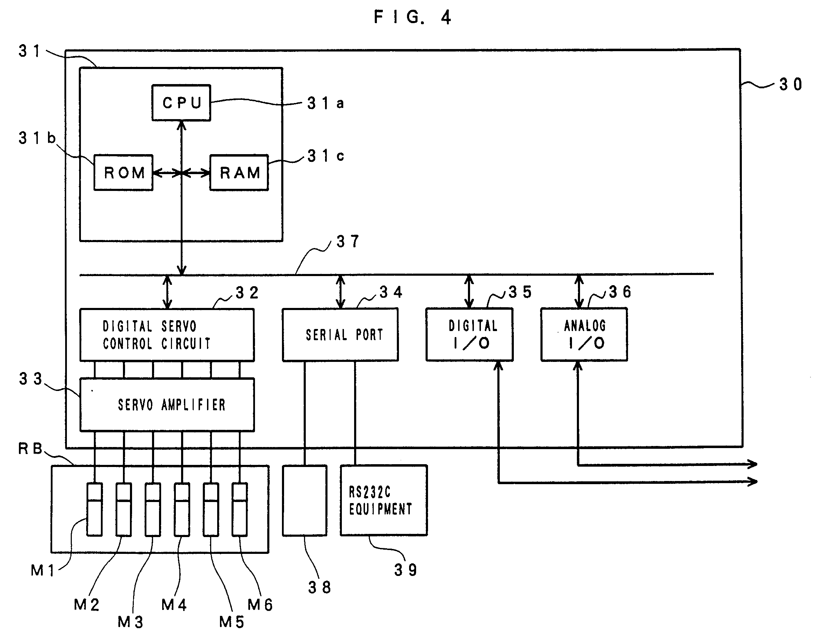

Referring to FIG. 2a, a servomotor M6 is used as a common drive source of both the final wrist axis (sixth axis J6) of the six-axis robot shown in FIG. 1 and the servo hand. The operation of the servomotor M6 is controlled by a robot controller 30 in the same manner as servomotors M1 to M5 (see FIG. 4) for driving other robot axes J1 to J5.

A pulse coder (position detector) 11 is connected to an output shaft of the servomotor M6. An output of the pulse coder 11 is sent to the robot controller 30 as a feedback signal, and used for the control of the servomotor M6. An output shaft 12 of the servomotor M6 is connected to a speed reducer 13, and an output shaft 14 of the speed reducer 13 is fixed to a second arm 20.

A second hollow clutch 16 is attached to the second arm 20 in confronting relation to a first arm 18, and a first hollow clutch 15 is attached to a stationary portion (housing) of the speed reducer 13 in confronting relation to a first arm 18. The first arm 18 is supported on the output shaft 14 of the speed reducer 13 through a bearing 17 fitted on the output shaft 14 so that a rotational movement around the axis J6 and also a sliding movement along the axis J6 are allowed.

Each of the first and second hollow clutches 16 and 15 is constituted by an electromagnetic clutch having an exciting coil, and they are arranged symmetrically with respect to the first arm 18. The robot controller 30 selectively issues a command E1 for exciting the coil of the first hollow clutch 15 or a command E2 for exciting the coil of the second hollow clutch 16. In other words, the coils of the hollow clutches 15 and 16 are never excited simultaneously.

When the command E1 is output, the coil of the first hollow clutch 15 is excited to connect the first arm 18 with the housing of the speed reducer 13. That is, the first arm 18 is fixed to the drive axis J5 immediately before the final wrist axis J6. At this time, as the command E2 is not issued, the excitation of the coil of the second hollow clutch 16 is turned off, so that the connection between the first arm 18 and the second arm 20 is released.

In this state, when the servomotor M6 is rotated, the first arm 18 remains stopped, and only the second arm 20 is driven by the servomotor M6. As a result, as indicated by arrows in FIG. 2b, the second arm 20 is rotationally displaced with respect to the first arm 18, so that a distal end 21 of the second arm 20 comes close to or goes away from a distal end 19 of the first arm 18 to achieve an opening/closing operation. That is, when the command E1 is issued, the first and second arms 18 and 20 function as a servo hand driven by the servomotor M6 (in a diversion mode).

When the command E2 is issued, the excitation of the second hollow arm clutch 16 is turned on, to connect the first arm 18 integrally with the second arm 20. At this time, as the command E1 is not issued, the excitation of the first hollow clutch 15 is turned off, so that the connection between the first arm 18 and the housing of the speed reducer is released.

In this state, when the servomotor M6 is rotated, the first and second arms 18 and 20 are driven integrally with each other with respect to the drive axis J5 immediately before the final wrist axis J6. That is, a rotational displacement of the second arm 20 relative to the first arm 18 is not take place, so that an approaching/retreating action of the distal ends 19 and 21 is not performed. In other words, when the command E2 is issued, the first and second arms 18 and 20 do not function as a servo hand, and only a posture of the robot hand constituted of the arms 18 and 20 is changed by the rotation of the servomotor M6 (in a non-diversion mode).

Thus, according to this embodiment, either the command E1 or the command E2 is issued from the robot controller 30, to select a servo-hand operation mode or an ordinary mode in which the robot is operated as a six-axis robot.

The opening/closing position of the servo hand 10 can be defined by the relative angle θh between the distal end portions of the first and second arms 18 and 20. The relative angle θh is recognized by the robot controller 30 as a difference of posture between the first arm 18 and the second arm 20 around the axis J6. To recognize the difference of posture between the arms 18 and 20 around the axis J6, the output of the pulse coder 11 can be used (when only the second arm 20 is rotated) after the command E1 has been issued.

Further, as indicated by broken lines in FIG. 2a, pulse coders 11a and 11b respectively connected to the peripheries of the first and second arms 18 and 20 through gears or the like may be provided to directly measure the rotational positions of the first and second arms 18 and 20 around the axis J6 and output to the robot controller 30. In general, the method of directly measuring the rotational positions of the arms 18 and 20 around the axis J6 is advantageous in accurately measuring the opening/closing position of the servo hand.

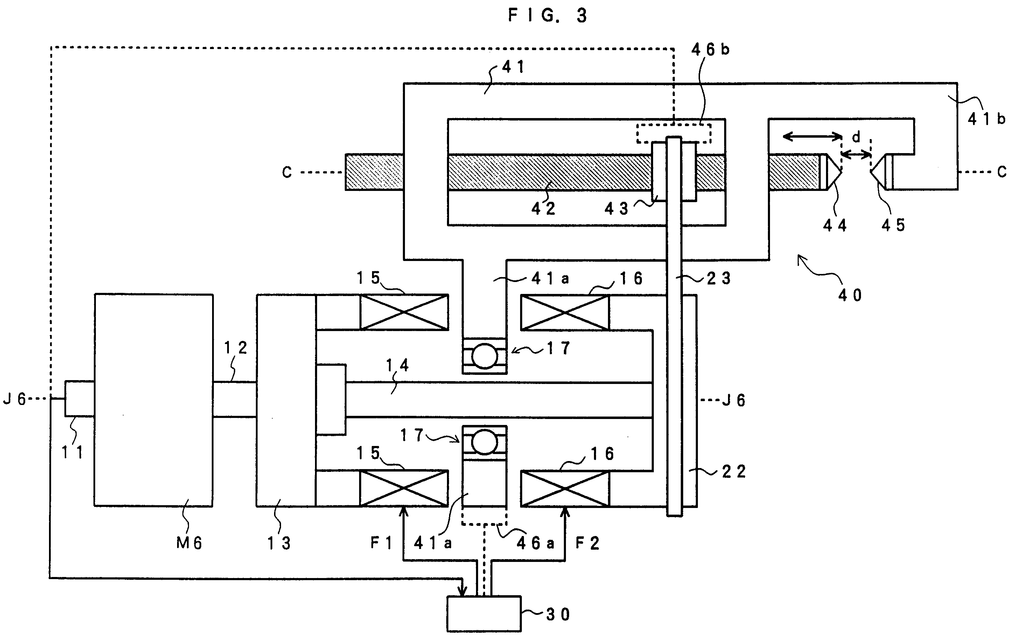

Next, a second embodiment of the present invention will be described referring to FIG. 3. In the second embodiment, a servo gun 40 as a servo tool is attached to the final wrist axis of the six-axis robot shown in FIG. 1. In FIG. 3, the same reference numerals are applied to the elements common to those in the first embodiment.

In the same manner as the first embodiment, a servomotor M6 is used as a common drive source for the final wrist axis (sixth axis J6) of the six-axis robot shown in FIG. 1 and for the servo gun, and is controlled by a robot controller 30 like servomotors M1 to M5 for driving other robot axes J1 to J5.

A pulse coder 11 is connected to a rotational shaft of the servomotor M6. The output of the pulse coder 11 is sent to the robot controller 30 as a feedback signal, and used for the control of the servomotor M6. An output shaft 12 of the servomotor M6 is connected to an input shaft of a speed reducer 13, and an output shaft 14 of the speed reducer 13 is fixed to a pulley 22.

A first hollow clutch 15 is attached to a stationary portion (housing) of the speed reducer 13 and a second hollow clutch 16 is attached to the pulley 22. A bearing 17 is fitted on the output shaft 14 of the speed reducer 13, and a body 41 of the servo gun 40 is supported on the output shaft 14 through the bearing 17 and a foot portion 41a. Thus, the servo gun body 41 is allowed to rotate around the axis J6 and slide along the axis J6.

In comparison with the first embodiment shown in FIGS. 2a and 2b, the second arm 20 is replaced with the pulley 22, and the first arm 18 is replaced with the servo gun body 41 including the foot portion 41a.

The servo gun 40 comprises a ball screw 42 penetrating the servo gun body 41 and having an axis C-C parallel to the final wrist axis J6, and a ball nut threadedly engaged with the ball screw 42. A tip 44 for spot welding is attached to the distal end of the ball screw 42, and a tip 45 facing the tip 44 is attached to an end portion 41b of the servo gun body 41. The pulley 22 and the nut 43 are connected to each other by a transmission mechanism including a belt 23.

Each of the first and second hollow clutches 16 and 15 is constituted by an electromagnetic clutch having an exciting coil, and they are arranged symmetrically with respect to the foot portion 41a of the servo gun body 41. In the same manner as the first embodiment, the robot controller 30 issues either a command F1 for exciting the coil of the first hollow clutch 15 or a command F2 for exciting the coil of the second hollow clutch 16. The coils of the hollow clutches 15 and 16 are never excited simultaneously.

When the command F1 is issued, the coil of the first hollow clutch 15 is excited to fix the foot portion 41a of the servo gun body 41 to the housing of the speed reducer 13. At this time, as the command F2 is not issued, the coil of the second hollow clutch 16 is not excited, so that the connection between the servo gun body 41 and the pulley 22 is released.

In this state, when the servomotor M6 is rotated, only the pulley 22 is driven while the foot portion 41a remains stopped. As a result, the belt 23 runs to cause the ball screw 42 threadedly engaged with the ball nut 43 to displace linearly along the axis C-C, and thus the tips 44 and 45 come close to or go away from each other, to achieve an opening/closing action of the servo gun. That is, when the command F1 is issued, the final wrist axis J6 functions as a servo gun drive axis (in a diversion mode).

When the command F2 is issued, the command F1 is turned off, and only the coil of the second hollow clutch 16 is excited to connect the foot portion 41a of the servo gun body 41 integrally with the pulley 22. Therefore, when the servomotor M6 is rotated in this state, the belt 23 is not driven. In other words, in the state in which the command F2 has been issued, the opening/closing operation of the servo gun is not performed, and only a posture of the robot hand holding the servo gun is changed (in a non-diversion mode).

Thus, according to the second embodiment, by issuing either the command F1 or the command F2 from the robot controller 30, the servo-gun operation mode or the ordinary mode in which the robot is operated as a six-axis robot can be selected.

The opening/closing position of the servo gun can be defined by, for example, a distance d between the tips 44 and 45. This distance d is recognized by the robot controller 30 as a linear position along the axis C-C of the ball screw 42. To recognize the linear position of the ball screw 42, the output of the pulse coder 11 can be used (when the belt 23 runs) after the command E1 has been issued.

Further, as indicated by broken lines in FIG. 3, a pulse coder 46a for directly detecting the rotational position of the servo gun body 41 and a pulse coder 46b for directly detecting the rotational position of the ball nut 43 may be provided so that the outputs of the pulse coders are sent to the robot controller 30. In general, directly detecting the rotational position of the servo gun body 41 and the rotational position of the nut 43 is advantageous in accurately measuring the posture and the opening/closing position of the servo gun.

FIG. 4 is a block diagram of a principal part of the robot controller 30 which can be used in the above-described embodiments. As shown in FIG. 4, the robot controller 30 is equipped with a processor board 31, which includes a central processing unit (CPU) 31a in the form of a microprocessor, ROM 31b, and RAM 31c.

The CPU 31a controls the whole of the robot controller 30 in accordance with a system program stored in the ROM 31b. The RAM 31c stores an operation program already prepared, various setting values, etc. A part of the RAM 31c is used for temporary storage of data for the processing carried out by the CPU 31a. To store program data and setting values, a hard disc drive etc. available as an external unit are appropriately used.

The processor board 31 is connected to a bus 37, so that commands and data are transferred between the processor board 31 and other sections in the robot controller 30 through the bus linkage. A digital servo control circuit 32, which is connected to the processor board 31, controls the servomotors M1-M6 through a servo amplifier 33 upon receipt of a command from the CPU 31a. As described above, the servomotor M6 is commonly used for driving the final wrist axis (sixth axis in the embodiments) and for driving the servo tool such as a servo hand and a servo gun. Other servomotors M-M5 drive the first to fifth axes of the robot like the conventional robot.

A serial port 34 is connected to the bus 37. This serial port 34 is connected to a teaching operation panel 38 having a liquid crystal display and RS232C equipment (communication interface) 39. The teaching operation panel 38 is used for inputting the operation program and other programs, position data, and other necessary setting values.

Further, a digital signal input/output device (digital I/O) 35 and an analog signal input/output device (analog I/O) 36 are connected to the bus 37 to transfer signals to and from external devices. The selective command E1/E2 or F1/F2, which has been explained in the above embodiments, is issued to the clutch 15 or 16 from the CPU 31a via the digital signal input/output device (digital I/O) 35. Needless to say, the issuance of the command and changeover thereof, the setting of a position and an operation speed of the servo tool (position and speed of opening/closing of the servo hand or the servo gun), etc. can be carried out at the time of a playback of the operation program in which statements therefor are written, or by a manual command input from the teaching operation panel 38.

The robot of the present invention has a function of utilizing the final wrist axis as a drive axis for the servo tool. Therefore, the servo tool such as the servo hand and the servo gun can be mounted on a robot without providing an dedicated additional axis, and thus it is advantageous in economy.

## Claims

1. A robot having a plurality of servo-controlled drive axes including a final wrist axis, said robot comprising:
a servo tool operatively connected to said final wrist axis;
a servomotor used as a drive source for said final wrist axis; and
a drive source diverting means for using said servomotor as a drive source for said servo tool,
wherein said drive source diverting means has a changeover mechanism operatively connected to an output shaft of said servomotor, and said changeover mechanism operates in a diversion mode where said servomotor is used as a drive source for said servo tool and in a non-diversion mode where said servomotor is used as a drive source for said final wrist axis.

2. A robot according to claim 1, further comprising a robot controller for servo-controlling said plurality of drive axes, wherein a changeover of said diversion mode and said non-diversion mode of said changeover mechanism is controlled by said robot controller.

3. A robot according to claim 2, further comprising a position detector for directly detecting a position of said servo tool, wherein an output of said position detector is used for controlling said servo tool by said robot controller.

4. A robot according to any one of claims 1 to 3, wherein said servo tool comprises a servo hand.

5. A robot according to claim 4, wherein said servo hand comprises a first arm and a second arm connected to the output shaft of said servomotor, and
said changeover mechanism comprises a first clutch for connecting and disconnecting said first arm to and from said second arm, and a second clutch for connecting and disconnecting said first arm to and from a drive axis immediately before said final wrist axis.

6. A robot according to claim 5, wherein said first clutch and said second clutch respectively comprise an electromagnetic clutch.

7. A robot according to any one of claims 1 to 3, wherein said servo tool comprises a servo gun.

8. A robot according to claim 6, wherein said servo gun comprises a servo gun body and a pulley connected to the output shaft of said servomotor, and
said changeover mechanism comprises a first clutch for connecting and disconnecting said servo gun body to and from said pulley, and a second clutch for connecting and disconnecting said servo gun body to and from a drive axis immediately before said final wrist axis.

9. A robot according to claim 8, wherein said first clutch and said second clutch respectively comprise an electromagnetic clutch.
